# FASCICULE DE BREVET EUROPEEN

(11) **EP 0 679 559 B1**
(45) Date de publication et mention de la délivrance du brevet: **28.01.1998**
(21) Numéro de dépôt: 95105968.2
(22) Date de dépôt: 21.04.1995
(51) Int. Cl.: B60S 1/24, F16C 25/04

(54) **Mécanisme d'essuie-glace comportant un dispositif d'articulation perfectionné entre une bielle et une manivelle du mécanisme**
Scheibenwischermechanismus mit einer verbesserten Gelenkverbindung zwischen einer Kurbel und einer Gelenkstange des Mechanismus
Windscreen wiper mechanism with an improved pivot joint between a link rod and a crank of the mechanism

(30) Priorité: 26.04.1994 FR 9405027
(43) Date de publication de la demande: 02.11.1995
(73) Titulaire: PAUL JOURNEE S.A., F-60240 Reilly (FR)
(72) Inventeur: Journee, Maurice, F-60240 Reilly (FR)
(74) Mandataire: Lemaire, Marc

(56) Documents cités:
- DE-B- 1 575 454
- FR-A- 2 143 398
- US-A- 3 845 998
- US-A- 5 015 136

## Description

La présente invention concerne un mécanisme d'essuie-glace.

L'invention concerne plus particulièrement un mécanisme du type comportant un dispositif d'articulation d'une bielle sur une manivelle au moyen d'un axe d'articulation selon le préambule de la revendication 1.

Un exemple d'un tel mécanisme d'essuie-glace, notamment du type à balayage non circulaire, est décrit et représenté dans le document FR-A-1.546.319 et un dispositif d'articulation perfectionné d'un tel mécanisme fait l'objet de la demande de brevet français n^{o} 93 06724 du 4 juin 1993 (correspondant au document EP-A-627346 publié le 07/12/1994).

Selon ce perfectionnement, le mécanisme d'essuie-glace est du type comportant une articulation pour la manivelle reliée par un axe de rotation à la bielle, l'axe présentant une tête, un premier tronçon cylindrique et un second tronçon cylindrique de diamètre inférieur, la tête et les deux tronçons étant coaxiaux, et est du type dans lequel le premier tronçon traverse une bague disposée dans la manivelle, le second tronçon traverse un élément de renfort porté par la bielle, la manivelle porte au moins une rondelle, et au moins une rondelle est immobilisée en rotation par rapport à la manivelle.

Selon ce perfectionnement, les rondelles en matériau de frottement, pour assurer efficacement leur fonction, doivent être serrées axialement contre les surfaces en vis-à-vis.

Etant donné les tolérances de fabrication des différents composants du dispositif d'articulation, et notamment les tolérances de fabrication de l'axe et des lamages opposés formés dans les faces latérales opposées de la manivelle, on constate que, à l'issue des opérations d'assemblage et d'immobilisation axiale effectuées par exemple par sertissage d'une tête à l'extrémité libre de l'axe d'articulation, le serrage axial des rondelles de frottement n'est pas assuré, ou est assuré de manière insuffisante.

La présente invention a pour but de proposer un mécanisme d'essuie-glace perfectionné qui permet de remédier aux inconvénients qui viennent d'être mentionnés.

Dans ce but, l'invention propose un mécanisme d'essuie-glace du type comportant un dispositif d'articulation d'une bielle sur une manivelle au moyen d'un axe d'articulation comportant successivement une tête qui prend appui contre une portion de surface formée en vis-à-vis dans une première face latérale de la manivelle, un premier tronçon cylindrique qui traverse un perçage de la manivelle et un second tronçon cylindrique de plus petit diamètre qui prolonge le premier tronçon et qui traverse un perçage formé dans la bielle, et des moyens d'immobilisation axiale de la bielle sur le second tronçon de l'axe, caractérisé en ce que la portion de surface d'appui de la manivelle comporte des moyens de rattrapage de jeu axial qui sont susceptibles d'être écrasés lors de la mise en oeuvre des moyens d'immobilisation axiale.

Selon d'autres caractéristiques de l'invention :
- les moyens de rattrapage de jeu axial sont réalisés venus de matière avec la portion de surface d'appui de la manivelle ;
- les moyens de rattrapage de jeu axial comportent au moins une protubérance formée dans la portion de surface d'appui de la manivelle ;
- la protubérance est une nervure annulaire ;
- une première rondelle, traversée par le premier tronçon cylindrique de l'axe d'articulation, est interposée entre la tête de l'axe et la portion de surface d'appui de la manivelle ;
- une deuxième rondelle, traversée par le premier tronçon cylindrique de l'axe, est interposée entre la seconde face latérale de la manivelle et une face en vis-à-vis de la bielle ;
- une troisième rondelle, traversée par le second tronçon cylindrique de l'axe, est interposée entre la deuxième rondelle et la face en vis-à-vis de la bielle ;
- le dispositif d'articulation comporte une coupelle d'étanchéité comportant une collerette de serrage interposée entre la troisième rondelle et la face en vis-à-vis de la bielle, et comportant une jupe d'étanchéité dont le bord libre coopère avec une portion en vis-à-vis de la seconde face latérale de la manivelle;
- la portion de surface d'appui de la manivelle est constituée par le fond d'un lamage formé dans la première face latérale de la manivelle ;
- le dispositif d'étanchéité comporte un capot d'étanchéité porté par la manivelle et qui recouvre la tête de l'axe ;
- un joint annulaire d'étanchéité est interposé entre le capot et la première face latérale de la manivelle.

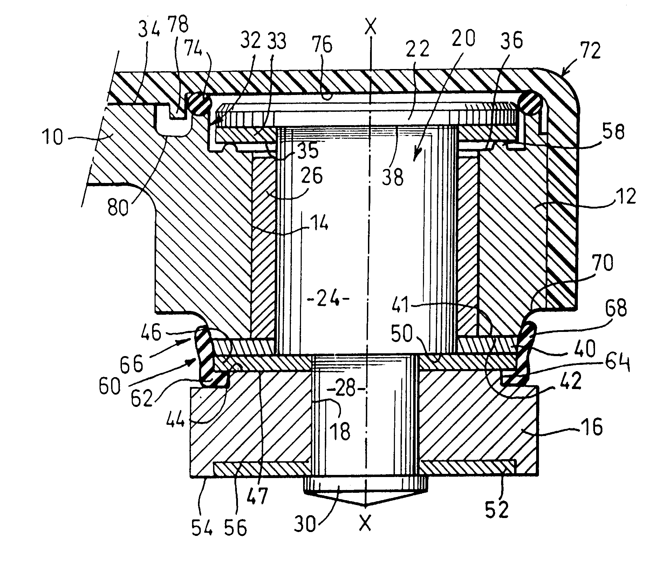

D'autres caractéristiques et avantages de l'invention apparaîtront à la lecture de la description détaillée qui va suivre pour la compréhension de laquelle on se reportera au dessin annexé dont la figure unique est une vue en section axiale d'une partie d'un mécanisme d'essuie-glace comportant un dispositif d'articulation réalisé conformément aux enseignements de l'invention.

On reconnaît sur la figure une partie du corps allongé 10 d'une manivelle dont la portion d'extrémité 12 présente une épaisseur plus importante et est traversée par un perçage débouchant 14.

On reconnaît également la portion d'extrémité 16 d'une bielle appartenant, comme la manivelle 10, à un mécanisme d'articulation pour la commande en rotation d'un essuie-glace (non représenté).

Pour la conception générale du mécanisme d'essuie-glace ainsi que du dispositif d'articulation selon l'état de la technique on se reportera au contenu des deux documents cités précédemment.

La bielle 16 est traversée par un perçage débouchant 18 qui, en position montée, est coaxial au perçage 14.

La liaison et l'articulation de la bielle 16 sur la manivelle 10, 12 est assurée au moyen d'un axe d'articulation 20 d'axe X-X.

L'axe d'articulation comporte une tête élargie 22, un premier tronçon cylindrique 24 de grand diamètre qui s'étend axialement à travers le perçage 14 de la manivelle 12 avec interposition d'une bague ou douille d'étanchéité 26, un second tronçon cylindrique de plus petit diamètre 28 qui s'étend axialement à travers le perçage 18 de la bielle 16, et une extrémité libre sertie 30.

L'axe d'articulation 20 est une pièce de révolution et la tête 22 ainsi que les tronçons 24 et 28 sont coaxiaux, d'axe commun X-X.

La tête 22 est logée dans un lamage 32 usiné dans la face supérieure 34 de la manivelle 10.

Une première rondelle de frottement 33 est interposée entre le fond 36 du lamage 32 et la face inférieure 38 de la tête 22.

Une seconde rondelle de frottement 40 est interposée entre la face inférieure 42 de la position d'extrémité de la manivelle 12 et la face supérieure 44 de la bielle 16.

Les rondelles 34 et 40 sont traversées par le premier tronçon cylindrique de grand diamètre 24 de l'axe d'articulation 20.

Une troisième rondelle 46 est interposée entre la deuxième rondelle 40 et la face supérieure 44 de la bielle 16 et est traversée par le second tronçon cylindrique 28 de plus petit diamètre de l'axe d'articulation 20 de manière à prendre appui contre la face radiale inférieure 5O de l'épaulement qui délimite entre eux les tronçons cylindriques 24 et 28 de l'axe d'articulation 20.

Une quatrième rondelle 52 peut être interposée entre la face inférieure 54 de la bielle 16 et la tête sertie 30 en étant par exemple reçue dans un lamage 56 formé dans la face inférieure 54 de la bielle 16.

Conformément aux enseignements de l'invention, et selon un exemple de réalisation préféré de l'invention, le fond 36 du lamage 32 qui constitue la surface d'appui et de serrage avec laquelle coopère indirectement la face inférieure 38 de la tête élargie 22, comporte une nervure ou jonc annulaire 58 qui est réalisée venue de matière avec la manivelle 10, 12 et qui est susceptible d'être écrasée partiellement ou totalement lors des opérations de sertissage axial de l'ensemble.

A cet effet, les dimensions de la nervure 58 sont déterminées, de façon à permettre son écrasement total ou partiel par la face inférieure 35 de la première rondelle 33 lorsque l'on réalise le sertissage de la tête sertie 30, et ceci de façon à garantir qu'il n'existe pas de jeu axial, à l'issue de l'opération de sertissage, entre les rondelles 34 et 40 et les portions de surface en vis-à-vis des faces supérieure 34 et inférieure 42 de la manivelle 10, 12.

La bague ou douille 26 doit bien entendu présenter une longueur axiale réduite par rapport à la distance séparant le fond 36 du lamage 32 de la portion dressée de la face inférieure 42 de la manivelle 12 contre laquelle prend appui la face supérieure 41 de la deuxième rondelle 40.

Afin de garantir une bonne étanchéité du dispositif d'articulation, une coupelle d'étanchéité 60 est agencée à la partie inférieure.

A cet effet, la coupelle 60 comporte une collerette de serrage 62 qui est serrée axialement entre un épaulement radial 64 formé dans la face supérieure 44 de la bielle 16 et la face inférieure 47 de la troisième rondelle 46.

La collerette de serrage 62 se prolonge par une jupe annulaire 66 dont le bord libre d'extrémité 68 coopère de manière étanche avec la portion en vis-à-vis 70 de la face inférieure de la manivelle 12.

L'étanchéité est également complétée par un capot d'étanchéité 72 qui est fixé sur la portion d'extrémité 12 de la manivelle 10 et qui recouvre la tête élargie 22 et le lamage 32 avec interposition d'un joint annulaire d'étanchéité 74.

La face inférieure 76 du capot 72 peut également comporter une nervure 78 qui est reçue dans une rainure en vis-à-vis 80 formée dans la face supérieure 34 de la manivelle 12 pour constituer une chicane d'étanchéité.

L'invention n'est pas limitée au mode de réalisation qui vient d'être décrit.

Les moyens de rattrapage du jeu axial agencé entre la tête élargie 22 et la surface d'appui en vis-à-vis 36 de la manivelle 12 peuvent notamment revêtir de nombreuses formes de réalisation.

Dans le cas où ces moyens sont réalisés venus de matière avec la portion d'extrémité 12 de la manivelle 10, ils peuvent être constitués par une ou plusieurs nervures annulaires ou par une série de plots ou protubérances en saillie qui sont écrasés totalement ou partiellement lors du serrage axial.

Il est également possible de prévoir que les moyens de rattrapage du jeu axial sont réalisés sous la forme d'un élément indépendant, tel qu'un anneau métallique qui est mis en place entre le fond 36 du lamage 32 et la face inférieure 35 de la première rondelle 34, lors de l'assemblage, et qui est écrasé totalement ou partiellement lors des opérations de serrage axial.

## Revendications

1. Mécanisme d'essuie-glace du type comportant un dispositif d'articulation (36) d'une bielle (16) sur une manivelle (10,12) au moyen d'un axe d'articulation (20) comportant successivement une tête (22) qui prend appui contre une portion de surface d'appui formée en vis-à-vis dans une première face latérale (34) de la manivelle (10,12), un premier tronçon cylindrique (24) qui traverse un perçage (14) de la manivelle (10,12) et un second tronçon cylindrique de plus petit diamètre (28) qui prolonge le premier tronçon (24) et qui traverse un perçage (18) formé dans la bielle (16), et des moyens (30) d'immobilisation axiale de la bielle (16) sur le second tronçon (28) de l'axe d'articulation (20), caractérisé en ce que la portion de surface d'appui (36) de la manivelle (10,12) comporte des moyens (58) de rattrapage du jeu axial qui sont susceptibles d'être écrasés lors de la mise en oeuvre des moyens (30) d'immobilisation axiale.

2. Mécanisme d'essuie-glace selon la revendication 1, caractérisé en ce que les moyens de rattrapage de jeu axial sont réalisés venus de matière avec la portion de surface d'appui (36) de la manivelle (10,12).

3. Mécanisme d'essuie-glace selon la revendication 2, caractérisé en ce que les moyens de rattrapage de jeu axial comportent au moins une protubérance (58) formée dans la portion de surface d'appui (36) de la manivelle (10,12).

4. Mécanisme d'essuie-glace selon la revendication 3, caractérisé en ce que la protubérance est une nervure annulaire (58).

5. Mécanisme d'essuie-glace selon l'une quelconque des revendications précédentes, caractérisé en ce qu'une première rondelle (33), traversée par le premier tronçon cylindrique (24) de l'axe d'articulation (20), est interposée entre la tête (22) de l'axe (20) et la portion de surface d'appui (36) de la manivelle (10,12).

6. Mécanisme d'essuie-glace selon l'une quelconque des revendications précédentes, caractérisé en ce qu'une deuxième rondelle (40), traversée par le premier tronçon cylindrique (24) de l'axe d'articulation (20), est interposée entre la seconde face latérale (42) de la manivelle (10,12) et une face latérale en vis-à-vis (44) de la bielle (16).

7. Mécanisme d'essuie-glace selon la revendication 6, caractérisé en ce qu'une troisième rondelle (46), traversée par le second tronçon cylindrique (28) de l'axe d'articulation (20), est interposée entre la deuxième rondelle (40) et ladite face en vis-à-vis (44) de la bielle (16).

8. Mécanisme d'articulation selon la revendication 7, caractérisé en ce que le dispositif d'articulation comporte une coupelle d'étanchéité (60) comportant une collerette de serrage (62) interposée entre la troisième rondelle (46) et ladite face en vis-à-vis (44, 64) de la bielle (16), et comportant une jupe d'étanchéité (66) dont le bord libre (68) coopère avec une portion en vis-a-vis (70) de la seconde face latérale (42) de la manivelle (10,12).

9. Mécanisme d'essuie-glace selon l'une quelconque des revendications précédentes, caractérisé en ce que la portion de surface d'appui (36) de la manivelle (10,12) est constituée par le fond (36) d'un lamage (32) formé dans la première face latérale (34) de la manivelle (10,12).

10. Mécanisme d'essuie-glace selon l'une quelconque des revendications précédentes, caractérisé en ce que le dispositif d'articulation comporte un capot d'étanchéité (72) porté par la manivelle (12) et qui recouvre la tête (22) de l'axe d'articulation (20).

11. Mécanisme d'essuie-glace selon la revendication 10, caractérisé en ce qu'un joint annulaire d'étanchéité (74) est interposé entre le capot (72) et la première face latérale (34) de la manivelle (10,12).

## Claims

1. A screen wiper mechanism of the type that includes an articulating device (36) whereby a crank (16) is articulated on a connecting rod (10, 12), by means of a pivot pin (20) comprising, in axial succession, a head (22) which bears against an engagement surface portion formed in facing relationship therewith in a first lateral face (34) of the connecting rod (10, 12), a first cylindrical shank portion (24) which extends through a hole (14) in the connecting rod (10, 12), and a second cylindrical shank portion (28) of smaller diameter, which extends the first shank portion (24) and which extends through a hole (18) formed in the crank (16), together with means (30) for immobilising the crank (16) axially on the second shank portion (28) of the pivot pin (20), characterised in that the engagement surface portion (36) of the connecting rod (10, 12) includes means (58) for taking up axial clearance, which are adapted to be compressed during formation of the axial immobilising means (30).

2. A screen wiper mechanism according to Claim 1, characterised in that the means for taking up axial clearance are formed integrally with the engagement surface portion (36) of the connecting rod (10, 12).

3. A screen wiper mechanism according to Claim 2, characterised in that the means for taking up axial clearance comprise at least one projection (58) formed in the engagement surface portion (36) of the connecting rod (10, 12).

4. A screen wiper mechanism according to Claim 3, characterised in that the projection is an annular rib (58).

5. A screen wiper mechanism according to any one of the preceding Claims, characterised in that a first ring (33), through which the cylindrical first shank portion (24) of the pivot pin (20) extends, is interposed between the head (22) of the pivot pin (20) and the engagement surface portion (36) of the connecting rod (10, 12).

6. A screen wiper mechanism according to any one of the preceding Claims, characterised in that a second ring (40), through which the cylindrical first shank portion (24) of the pivot pin (20) extends, is interposed between the second lateral face (42) of the connecting rod (10, 12) and a lateral face (44) of the crank (16) in facing relationship therewith.

7. A screen wiper mechanism according to Claim 6, characterised in that a third ring (46), through which the cylindrical second shank portion (28) of the pivot pin (20) extends, is interposed between the second ring (40) and the said face (44) of the crank (16) in facing relationship with it.

8. An articulating mechanism according to Claim 7, characterised in that the articulating device includes a sealing cup member (60) comprising a gripping collar portion (62) which is interposed between the third ring (46) and the said face (44, 64) of the crank (16) in facing relationship with it, and comprising a sealing skirt (66), the free edge (68) of which cooperates with a portion (70) of the second lateral face (42) of the connecting rod (10, 12), in facing relationship with it.

9. A screen wiper mechanism according to any one of the preceding Claims, characterised in that the engagement surface portion (36) of the connecting rod (10, 12) comprises the base (36) of a recess (32) which is formed in the first lateral face (34) of the connecting rod (10, 12).

10. A screen wiper mechanism according to any one of the preceding Claims, characterised in that the articulating device includes a sealing cap (72) which is carried by the connecting rod (12), and which overlies the head (22) of the pivot pin (20).

11. A screen wiper mechanism according to Claim 10, characterised in that an annular sealing ring (74) is interposed between the cap (72) and the first lateral face (34) of the connecting rod (10, 12).

## Patentansprüche

1. Scheibenwischermechanismus in der Ausführung mit einer Vorrichtung (36) zur Anlenkung einer Gelenkstange (16) an einer Kurbel (10, 12) mittels einer Gelenkachse (20), die hintereinander einen Kopf (22), der an einer Auflageteilfläche zur Auflage kommt, die gegenüber in einer ersten Seitenfläche (34) der Kurbel (10, 12) ausgebildet ist, ein erstes zylindrisches Teilstück (24), das durch eine Bohrung (14) der Kurbel (10, 12) hindurchgeht, und ein zweites zylindrisches Teilstück mit kleinerem Durchmesser (28) umfaßt, das das erste Teilstück (24) verlängert und das durch eine in die Gelenkstange (16) eingearbeitete Bohrung (18) hindurchgeht, sowie mit Mitteln (30) zur axialen Sicherung der Gelenkstange (16) am zweiten Teilstück (28) der Gelenkachse (20) , **dadurch gekennzeichnet,** daß die Auflageteilfläche (36) der Kurbel (10, 12) Mittel (58) zum Ausgleich des axialen Spiels umfaßt, die beim Einsatz der axialen Sicherungsmittel (30) eingedrückt werden können.

2. Scheibenwischermechanismus nach Anspruch 1 , **dadurch gekennzeichnet,** daß die Mittel zum Ausgleich des axialen Spiels einstückig mit der Auflageteilfläche (36) der Kurbel (10, 12) ausgeführt sind.

3. Scheibenwischermechanismus nach Anspruch 2 , **dadurch gekennzeichnet,** daß die Mittel zum Ausgleich des axialen Spiels mindestens eine Erhebung (58) umfassen, die in der Auflageteilfläche (36) der Kurbel (10, 12) ausgebildet ist.

4. Scheibenwischermechanismus nach Anspruch 3 , **dadurch gekennzeichnet,** daß die Erhebung eine ringförmige Rippe (58) ist.

5. Scheibenwischermechanismus nach einem der vorangehenden Ansprüche , **dadurch gekennzeichnet,** daß eine erste Scheibe (33), durch die das erste zylindrische Teilstück (24) der Gelenkachse (20) hindurchgeht, zwischen dem Kopf (22) der Gelenkachse (20) und der Auflageteilfläche (36) der Kurbel (10, 11) eingefügt ist.

6. Scheibenwischermechanismus nach einem der vorangehenden Ansprüche , **dadurch gekennzeichnet,** daß eine zweite Scheibe (40), durch die das erste zylindrische Teilstück (24) der Gelenkachse (20) hindurchgeht, zwischen der zweiten Seitenfläche (42) der Kurbel (10, 12) und einer gegenüberliegenden Fläche (44) der Gelenkstange (16) eingefügt ist.

7. Scheibenwischermechanismus nach Anspruch 6 , **dadurch gekennzeichnet,** daß eine dritte Scheibe (46), durch die das zweite zylindrische Teilstück (28) der Gelenkachse (20) hindurchgeht, zwischen der zweiten Scheibe (40) und der besagten gegenüberliegenden Fläche (44) der Gelenkstange (16) eingefügt ist.

8. scheibenwischermechanismus nach Anspruch 7 , **dadurch gekennzeichnet,** daß die Anlenkvorrichtung einen Dichtungsteller (60) mit einem Spannbund (62), der zwischen der dritten Scheibe (46) und der besagten gegenüberliegenden Fläche (44, 64) der Gelenkstange (16) eingefügt ist, und mit einer Dichtungseinfassung (66) umfaßt, deren freie Kante (68) mit einem gegenüberliegenden Abschnitt (70) der zweiten Seitenfläche (42) der Kurbel (10, 12) zusammenwirkt.

9. Scheibenwischermechanismus nach einem der vorangehenden Ansprüche , **dadurch gekennzeichnet,** daß die Auflageteilfläche (36) der Kurbel (10, 12) aus dem Boden (36) einer Einsenkung (32) besteht, die in die erste Seitenfläche (34) der Kurbel (10, 12) eingearbeitet ist.

10. Scheibenwischermechanismus nach einem der vorangehenden Ansprüche , **dadurch gekennzeichnet,** daß die Anlenkvorrichtung eine Dichtungskappe (72) umfaßt, die an der Kurbel (12) angebracht ist und die den Kopf (22) der Gelenkachse (20) abdeckt.

11. Scheibenwischermechanismus nach Anspruch 10, **dadurch gekennzeichnet**, daß zwischen der Kappe (72) und der ersten Seitenfläche (34) der Kurbel (10, 12) ein Dichtungsring (74) eingefügt ist.
